# EUROPEAN PATENT APPLICATION

(11) **EP 2 009 408 A2**
(43) Date of publication of application: **31.12.2008**
(21) Application number: 08159205.7
(22) Date of filing: 27.06.2008
(51) Int. Cl.: G01F 23/16, A47L 15/42

(54) **Device for detecting the liquid level in a tank of an electric household appliance**

(30) Priority: 29.06.2007 IT TO20070474
(71) Applicant: Premark FEG L.L.C., Wilmington, Delaware 19801 (US)
(72) Inventor: Montagnana, Luca, 45024 Fiesso Umbertiano (IT)
(74) Representative: Jorio, Paolo

(57) **Abstract**

A device for detecting the liquid level in a tank of an electric household appliance, including an airtight bell connected on one side to the tank and on the opposite side to a pressure switch by means of a hose-carrier nipple; wherein the airtight bell is defined by a rectilinear tube which obliquely protrudes from underneath the tank and externally to the same, towards a front panel of a casing of the household appliance, towards which it is fluid-tightly closed by a screw-on cap carrying the nipple for the connection to the pressure switch; the rectilinear tube is obtained integrally in one piece with a draining sump for the tank arranged immediately underneath a bottom wall of the tank and presents a first threaded end carrying the screw-on cap and a second end, opposite to the first, leading into the sump, flushed with a side wall of the same; shielding means being arranged in front of the second end of the rectilinear tube, preferably to create a siphon between the latter and the tank.

## Description

The present invention relates to a device for detecting the liquid level in a tank of an electric household appliance, in particular a dishwashing machine, integrated with the tank itself and/or with the sump of the tank so as to reduce the dimensions thereof. The invention further relates to an electric household appliance, in particular to a dishwashing machine for professional use, including such a device.

It is known that dishwashing machines, in particular those for professional use (for bars, restaurants, communities, etc.) present a washing compartment inferiorly delimited by a used washing fluid collection tank, from which an overflow tube draws, which maintains the level of the washing fluid in the tank constant. Furthermore, a sump which is normally used to aspirate part of the liquid in the tank and to recirculate it towards the washing/rinsing showerheads arranged inside the washing compartment and/or for draining the used liquid is arranged immediately underneath the tank.

In all cases, it is necessary to accurately check the liquid level in the tank, and this is performed by detecting such a liquid level by means of a level sensor arranged in the tank itself. According to EP-A-1758497, the level sensor is based on a floating system, arranged for drawing into the tank. Alternatively, according to EP-A-1352605, an air-tight bell is used, again arranged in the tank, within which the liquid level rises, along with that of the tank, but compressing the air trapped in the top of the bell in use; the latter is then connected by means of a hose carrier nipple and an appropriate flexible tube to a pressure sensor which, on the basis of the pressure of the air trapped inside the bell emits an electric signal which is proportional to the liquid level in the tank.

The above-described solutions are relatively cumbersome and are difficult to be assembled and, above all, to be maintained. The presence of the bell (or, even worse, of the float) is a real hindrance when cleaning the tank. Finally, since the bell is normally positioned at the rear part of the machine, if a maintenance intervention is needed, also only for simple cleaning the inside of the bell itself, the dishwashing machine must be turned around and the rear panel of the casing of the electric household appliance must be removed, which is not always easy.

It is the object of the present invention to provide a device for detecting the liquid level in a tank of an electric household appliance, in particular a dishwashing machine, which is free from the above mentioned drawbacks and at the same time reliable, compact, simple, relatively cost-effective to be made and assembled, which ensures an easy maintenance and which does not cause the formation of difficult areas to be cleaned, or however, of undesired obstructions in the tank. It is a further object of the invention to provide a dishwashing machine provided with such a device.

According to the invention, a device for detecting the liquid level in a tank of an electric household appliance, in particular a dishwashing machine, is thus provided as defined in claim 1.

The invention also relates to an electric household appliance, in particular a dishwashing machine, as defined in claim 10.

The device of the invention comprises an airtight bell connected on one side to the tank and on the opposite side to a pressure switch by means of a hose-carrier nipple and the airtight bell is defined by a rectilinear tube designed to obliquely protrude, in use, from underneath the tank and externally to the same, towards a front panel of a casing of the household appliance, and by a screw-on cap externally provided with the nipple for the connection to the pressure switch and which fluid-tightly closes a first end of the rectilinear tube, facing the front panel in use; a second end of the rectilinear tube, opposite to the first, being hydraulically connected to the tank substantially at a bottom wall of the same but without protruding into the tank.

Preferably, the rectilinear tube is obtained integral in one piece with the sump for the tank arranged immediately underneath a bottom wall of the tank and is provided towards the tank of an outlet opening arranged flushed with the internal surface of the side wall of the sump, with respect to which the rectilinear tube protrudingly and obliquely extends, upwards and laterally on the outside of the sump and at least in part under the tank.

In this manner, the tank does not present irregularities, cleaning is simple without the risk of accidentally tampering with the bell (or with the float) and the volumes and assembly times of the level detecting device and of the dishwashing machine as a whole are greatly reduced.

The solution according to the invention, specifically when the rectilinear tube is integrated with the sump, is extremely simple and functional and if the pressure inlet needs to be cleaned, it is necessary only to remove the front panel of the electric household appliance, which is an easy and simple operation, and loosen the screw cap, either by hand or with the simple support of a wrench.

For this purpose, the hose-carrier nipple is preferably axially and protrudingly obtained on a bottom wall of the screw-on cap, which is cup-shaped, externally to the same and in an offset position with respect to the rectilinear tube, preferably in a symmetric position with respect to a cylindrical pin axially and protrudingly carried by the bottom wall of the screw-on cap, parallelly to the hose-carrier nipple.

Further objects and advantages of the invention will be apparent from the following description of an embodiment thereof, provided only by way of non-limitative example and with reference to the accompanying drawings, in which:
- figure 1 diagrammatically shows an elevational, front view of a dishwashing machine equipped with the device according to the invention; and
- figure 2 shows an elevational, partial longitudinal-section side view according to a plotting plane II-II of the device and of the dishwashing machine in figure 1.

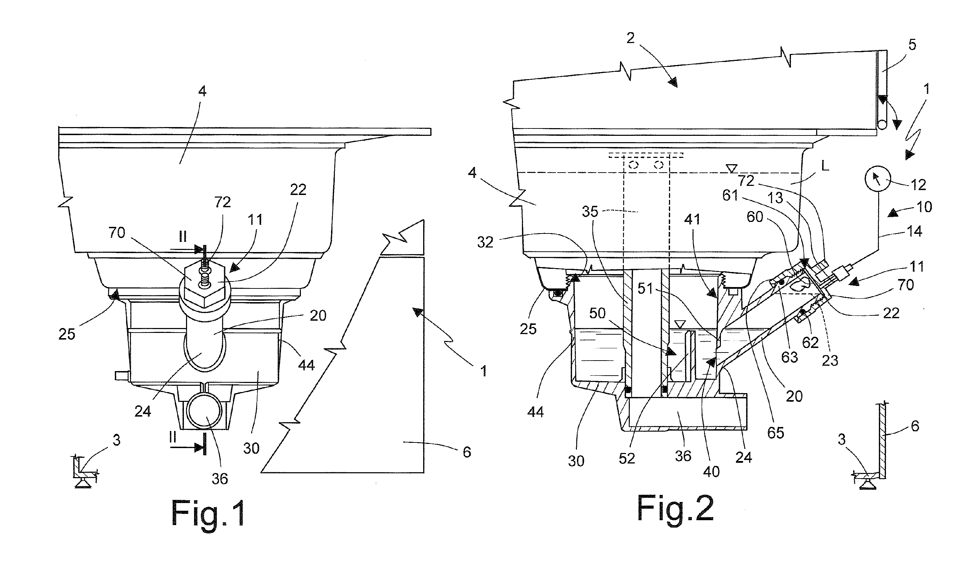

In figures 1 and 2, numeral 1 indicates as a whole an electric household appliance, in the shown case a dishwashing machine for professional use, comprising a washing compartment 2 delimited by a casing 3 of the electric household appliance 1 and, inferiorly, by a collection tank 4 for a washing fluid accessible through a front door 5 of the casing 3, arranged above a removable front buffering panel 6 of the casing 3, arranged in front of the tank 4.

The electric household appliance 1 comprises a device 10 for detecting the level of a liquid L present in use in the tank 4, which level is diagrammatically shown by means of a dashed line in figure 2 according to two possible heights it may reach in the tank 4.

The device 10 is also accommodated in the casing 3 and comprises in turn an airtight bell 11 connected on one side to the tank 4 and on the other side to a pressure switch 12 by means of a hose-carrier nipple 13 onto which a tube 14 (only diagrammatically shown) is fitted in use, which connects the internal top of the bell 11 to the pressure switch 12 allowing the latter, in a known manner, to detect in use the pressure of the air trapped inside the bell 11 and therefore to provide a control system of the electric household appliance 1 (known and not shown) with an electric signal which is proportional to the level of the liquid L present in the tank 4.

According to a first aspect of the invention, the airtight bell 11 is defined: by a rectilinear tube 20 specifically designed to obliquely protrude, in use, upwards from underneath the tank 4 and externally to the same, towards the removable front panel 6; and by a screw-on cap 22 externally provided with the nipple 13 for the connection to the pressure switch 12 and which fluid-tightly closes a first end 23 of the rectilinear tube 20, facing the front panel 6.

A second end 24 of the rectilinear tube 20, opposite to the end 23, is instead hydraulically connected to the tank 4, essentially at a bottom wall 25 of the same but without protruding into the tank 4.

Moreover, according to a further aspect of the invention, the rectilinear tube 20 is integrally obtained in one piece with a sump 30 of the tank 4, in the shown case formed as a cup-shaped body independent of the tank 4 and fluid-tightly mounted under the tank 4, against the bottom wall 25 and a corresponding through opening 32 in the wall 25 through which the sump 30 hydraulically communicates, in use, with the inside of the tank 4.

Preferably, the sump 30 is formed in one piece by moulding a synthetic plastic material and carries integrated therewith not only the rectilinear tube 20, but also an overflow tube 35 for the tank 4, which is connected to a corresponding draining pipe 36 for the exceeding liquid L.

According to another aspect of the invention, the rectilinear tube 20 presents an outlet opening 40 for the second end 24 towards the tank 4, which is arranged flushed with an internal surface 41 of a side wall 44 of the device 10, which is exposed in use to the liquid L in the tank 4, consisting in the shown case of the side wall of the sump 30, with respect to which the rectilinear tube 20 protrudingly and obliquely extends, laterally on the outside of the tank 4, in particular obliquely and overhangingly, upwards and laterally on the outside of the sump 30 and frontally with respect to the same, at least in part under the tank 4.

According to a further aspect of the invention, the device 10 further comprises shielding means 50 arranged at the second end 24 of the rectilinear tube 20 and arranged at least in part facing the end 24, in particular in front of the outlet opening 40 and at a given distance thereof which is measured parallelly to the axial extension of the tube 20, to create in use a siphon between the latter and the tank 4, in this case inside the sump 30.

The shielding means 50 comprise a radially internal projection 51 of the rectilinear tube 20 arranged flushed with the outlet opening 40 for superiorly chocking, towards the tank 4, the passage section of the rectilinear tube 20; and a baffle 52 arranged in front of the outlet opening 40 and of the choking protrusion 51 of the tube 20, at a predetermined distance from the same on the side facing the tank 4, in the mentioned parallel direction to the axial extension of the tube 20. In particular, the sump 30 is delimited by a cylindrical side wall 44 and the baffle 52 is made as a curved bulkhead which follows the curvature of the wall 44 and which is arranged, in plan, essentially according to a cord of the circular perimeter of the wall 44.

The upper edge of the baffle 52 is at a higher level than the lower edge of the projection 51, so that the lower end 24 of the tube 20 indeed defines, along with the baffle 52 and the projection 51, a siphon towards the sump 30 and the tank 4, which forces the liquid L to take a tortuous, S-shaped path to rise along the tube 20 and which, above all, avoids the complete emptying of the end 24 of the tube 20 from the liquid L also when the level of liquid L in the tank 4 and in the sump 30 is close to zero.

The upper end 23 of the tube 20 is in use fluid-tightly closed by the screw-on cap 22, so as to define in use a chamber 60 in which the air contained in the tube 20 remains trapped between the cap 22 and the surface height of the liquid L which in use rises along the tube 20 from the sump 30.

In particular, the screw-on cap 22 is cup-shaped and screwed onto an external threaded segment 61 of the end 23 of the tube 20; the latter is externally provided, at the end of the threaded segment 61, with an annular seat 62 for a seal ring 63 (o-ring type) arranged so that the seal ring 63 cooperates with a side wall segment 65 of the screw-on cap 22 free from threading when the screw-on cap 22 is fitted and screwed onto the end 23.

The hose-carrier nipple 13 is axially and protrudingly obtained on a bottom wall 70 of the screw-on cap, externally to the same and in an offset position with respect to the tube 20, preferably in a symmetric position with respect to a cylindrical pin 72 axially and protrudingly carried by the bottom wall 70 of the screw-on cap 22, parallelly to the hose-carrier nipple 13. Furthermore, the cap 22 laterally presents a prismatic shape, so that it can be easily and firmly grasped, either by hand or by means of an elastic, either at its side wall or if needed by means of the nipple 13 and the pin 72.

In use, the device 10 is fitted underneath the tank 4 when the tank 4 is empty and therefore the tube 20 is full of air. When the liquid L fills the tank 4 and the sump 30 underneath, it rises along the tube 20 from the lower end 20, into which it penetrates through the outlet opening 40 which is not obstructed by the projection 51 and thus compresses the air inside the tube 20 towards the top 23 to completely collect it in the chamber 60. Consequently, the pressure of the air at the nipple 13 rises according to the level of the liquid L, thus allowing the pressure switch 12 to emit a signal proportional to such a level.

To remove the dirt possibly accumulated in the tube 20, it is sufficient to remove the panel 6 and the cap 22 when the tank 4 is empty and to introduce through the end 23 thus opened a cleaning instrument, e.g. a brush, which can thus reach the opening 40 and the siphon defined by the projection 51 and the baffle 52 without obstructions.

## Claims

1. An integrated device for detecting the liquid level in a tank of an electric household appliance, in particular a dishwashing machine, of the type comprising an airtight bell connected on one side to the tank and on the opposite side to a pressure switch by means of a hose-carrier nipple; **characterised in that** the airtight bell is defined by a rectilinear tube designed to obliquely protrude, in use, from underneath the tank and externally to the same, towards a front panel of a casing of the household appliance, and by a screw-on cap externally provided with the nipple for connecting to the pressure switch and which fluid-tightly closes a first end of the rectilinear tube, facing the front panel in use; a second end of the rectilinear tube, opposite to the first, being hydraulically connectable to the tank substantially in correspondence with a bottom wall of the same but without protruding inside the tank.

2. A device according to claim 1, **characterised in that** said second end of the rectilinear tube presents an outlet opening arranged flushed with an internal surface of a side wall of the device exposed in use to the liquid present in the tank, with respect to which the rectilinear tube protrudingly and obliquely extends, laterally on the outside of the tank.

3. A device according to claim 2, **characterised in that** said rectilinear tube is integrally obtained in one piece with a sump for the tank adapted to fluid-tightly couple in use with the same in position immediately underneath the bottom wall of the tank; said outlet opening of the second end of the rectilinear tube being arranged flushed with the internal surface of a side wall of the sump, with respect to which the rectilinear tube protrudingly and obliquely extends, laterally on the outside of the sump and at least in part under the tank.

4. A device according to one of the claims 2 or 3, **characterised in that** it comprises shielding means arranged at said second end of the rectilinear tube.

5. A device according to claim 4, **characterised in that** said shielding means are arranged at least in part in front of said second end of the rectilinear tube, to create a siphon between the latter and said tank in use.

6. A device according to claims 4 and 5, **characterised in that** said shielding means comprise a radially internal projection of the rectilinear tube arranged flushed with said outlet opening of the second end of the same for superiorly chocking the passage section of the rectilinear tube, towards the tank.

7. A device according to claim 6, **characterised in that** said shielding means further comprise a baffle arranged in front of said outlet opening and said choking protrusion, at a predetermined distance from the same on the side facing said tank.

8. A device according to one of the preceding claims, **characterised in that** said screw-on cap is cup-shaped and screwed onto an externally threaded segment of said first end of the rectilinear tube, the latter being externally provided, at the end of said threaded segment, with an annular seat for a seal ring arranged so that the seal ring cooperates with a side wall segment of the screw-on cap free from threading when the screw-on cap is fitted and led onto the first end of the rectilinear tube.

9. A device according to claim 8, **characterised in that** said hose-carrier nipple is axially and protrudingly obtained on a bottom wall of the screw-on cap, externally to the same and in an offset position with respect to said rectilinear tube, preferably in symmetric position with respect to a cylindrical pin carried axially and protrudingly by the bottom wall of the screw-on cap, parallelly to the hose-carrier nipple.

10. An electric household appliance, in particular a dishwashing machine, comprising a washing compartment delimited by a casing of the electric household appliance and, inferiorly, by a collection tank for a washing liquid, and accessible through a door of the casing, comprising a device for detecting the level of liquid in the tank accommodated in the casing and comprising in turn an airtight bell connected on one side to the tank and on the other to a pressure switch by means of a hose-carrier nipple; **characterised in that** the airtight bell is defined by a rectilinear tube which obliquely protrudes underneath the tank and externally to the same, towards a removable front panel of the casing, and by a screw-on cap externally provided with the nipple for connecting to the pressure switch and which fluid-tightly closes a first end of the rectilinear tube, facing said front panel; a second end of the rectilinear tube, opposite the first, being hydraulically connected to the tank substantially in correspondence with a bottom wall of the same, but without protruding into the tank.

11. An electric household appliance according to claim 10, **characterised in that** said rectilinear tube is integrally obtained in one piece with a sump for the tank fluid-tightly mounted under the same; the rectilinear tube presenting an outlet opening for the second end towards the tank arranged flushed with an internal surface of a side wall of the sump, with respect to which the rectilinear tube obliquely and protrudingly extends, upwards and laterally on the outside of the sump and at least in part under the tank.
